# EUROPEAN PATENT SPECIFICATION

(11) **EP 3 268 685 B1**
(45) Date of publication and mention of the grant of the patent: **04.09.2019**
(21) Application number: 16718906.7
(22) Date of filing: 29.02.2016
(51) Int. Cl.: F27D 19/00

(54) **AN ADJUSTABLE HEAT EXCHANGE SYSTEM**
EINSTELLBARES WÄRMETAUSCHSYSTEM
SYSTEME D'ÉCHANGE DE CHALEUR RÉGLABLE

(30) Priority: 12.03.2015 IT MI20150052
(43) Date of publication of application: 17.01.2018
(73) Proprietor: Balderacchi, Gian Paolo, 42048 Rubiera (Reggio Emilia) (IT); Rusce, Cosimo, 42048 Rubiera (Reggio Emilia) (IT); Ruini, Primo, 42013 Casalgrande (Reggio Emilia) (IT); Gibertini, Enrico, 42122 Reggio Emilia (IT)
(72) Inventor: GIBERTINI, Enrico, 42122 Reggio Emilia (IT)
(74) Representative: Gagliardelli, Fabrizio
(86) International application number: PCT/IB2016/051100
(87) International publication number: WO 2016/142802

(56) References cited:
- EP-A1- 0 046 993
- US-A- 3 104 442

## Description

The present invention relates to an adjustable heat exchange system, especially, but not exclusively, for use in the ceramic industry.

The use of heat exchangers inside kilns for ceramic products, such as tiles, bricks, porcelain, etc. is well known.

In particular, the known exchangers are usually located in the cooling sections of the kiln, where the temperature of ceramic articles must be lowered.

Heat exchangers are used to recover energy from kilns, for example in order to heat buildings or supply dryers or the like.

A critical aspect of the use of the known systems consists in the fact that their absorption of heat can negatively impact the morphology of the ceramic product, in particular the planarity of tiles and regularity of the shape of porcelain products.

In fact, a sudden absorption of heat, especially if it takes place in a nonuniform manner, can cause changes of shape in a product that is not yet fixed, which can compromise the quality of the final product.

EP0046993 discloses a ceramic kiln having a heat exchanger, in the form of a cooling coil, provided in a cooling section where ceramic tiles are cooled down. Between the tiles and the exchanger, fixed covers are provided, which serves the object of stopping any scale or the like which may be formed on the cooling coils or serpentines from falling onto the ceramic structures. Also, a passage is provided between the covers, where a venetian blind is positioned, in order to regulate the degree of opening of the passage.

US3104442 describes a kiln including heat exchangers and slidable damper members positioned between the exchangers and a channel where a charge of bricks is fired. The dampers can be separated or closed so as to regulate a communication opening between the region of the kiln channel and the region of the exchanger.

The technical task at the basis of the present invention is therefore to propose an adjustable heat exchange system which overcomes the drawbacks of the prior art.

This technical task is reached by a system produced in accordance with claim 1.

Further features and advantages of the present invention will appear more clearly from the approximate, and thus non-limiting, description of a preferred but non-exclusive embodiment of the adjusting apparatus comprised in the system of the invention, as illustrated in the appended drawings, in which:
- figure 1 is a schematic longitudinal sectional representation of a roller kiln, in which the apparatus according to the invention is implemented;
- figure 2 is a schematic cross-sectional representation of the kiln in figure 1; and
- figure 3 is an enlargement of the detail K in figure 1.

With reference to the aforesaid figures, 1 generically denotes the apparatus for adjusting the heat exchange, included in the system of the invention.

The proposed system is especially, but not solely, intended for use in the ceramic industry.

In detail, the apparatus 1 was conceived to work in functional cooperation with heat exchangers located inside kilns 3 for firing ceramic products, particularly in the cooling sections.

Ceramic kilns 3, like the one shown by way of example in the figures, are used for the production of ceramic articles, such as tiles, bricks, ceramics, etc...

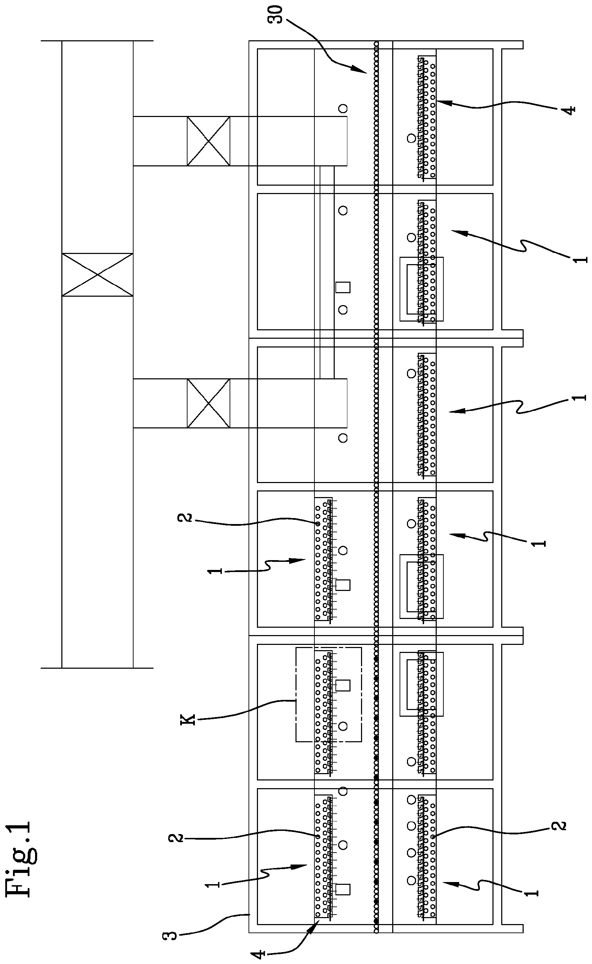

These kilns 3, as also shown in figure 1, have an elongated configuration defined by walls closed around a conveyor 30 which supports and conveys the ceramic articles, for example by means of rollers.

Exchangers 2 included in the system of the invention can be located anywhere, for example below the vault and above the conveyor 30, or else below the conveyor 30 or on the walls of the kiln 3 alongside the conveyor 30, etc...

In practical terms, the exchangers 2 are located inside the walls of the kiln 3 in positions such as to enable the removal of the heat irradiated by the ceramic articles in transit on top of the aforesaid conveyor 30.

In the illustrated example, a plurality of exchangers 2 is provided, located both above and below the conveyor 30; however, this is not a mandatory aspect, since, for example, all of the exchangers 2 could be provided only above or only below the conveyor 30, etc...

In practical terms, the invention is not limited by the positioning of the exchangers 2.

The invention is particularly intended for application in the first cooling section of the kilns 3, where rapid cooling takes place.

In fact, it is precisely in that section that the exchangers 2 achieve the best effectiveness of use, since it is the section in which the temperature of ceramic products can decrease, based on the different applications, from 1200 - 1300 °C to 600 - 400 °C.

In this temperature interval, a larger portion of the heat released by the products is emitted by irradiation and a smaller part transferred by convection.

Since the exchangers 2 in question are suitable for absorbing irradiated heat, it can be understood that the proposed apparatus 1 has its intended use in the aforesaid first cooling section.

The exchangers can comprise a plurality of tubes 2, for example bent in a serpentine manner, each extending mainly transversely to the axis of the kiln 3, or any other configuration suited to the purpose.

In the example represented in the appended figures, the heat exchange tubes define respective exchangers 2 having a generically planar shape or in any case a prismatic shape with a prevalently planar extent.

In the specific version represented in the appended drawings, the aforementioned tubes 2 are substantially parallel to the aforesaid conveyor 30 for advancing the ceramic products.

In this case, the exchanger 2 has a first side turned toward the surface of the conveyor 30, to which it is substantially parallel, and an opposite side facing, for example, a wall of the kiln 3.

The proposed apparatus 1 comprises first of all shielding means 10 intended to be arranged facing an exchanger 2 (or also a number of exchangers 2) or at least one portion of at least one exchanger 2. Preferably, the shielding means 10 are provided in the kiln 3 in interposition between the plane in which the conveyor 30 lies, and over which the ceramic articles pass, and the exchangers 2.

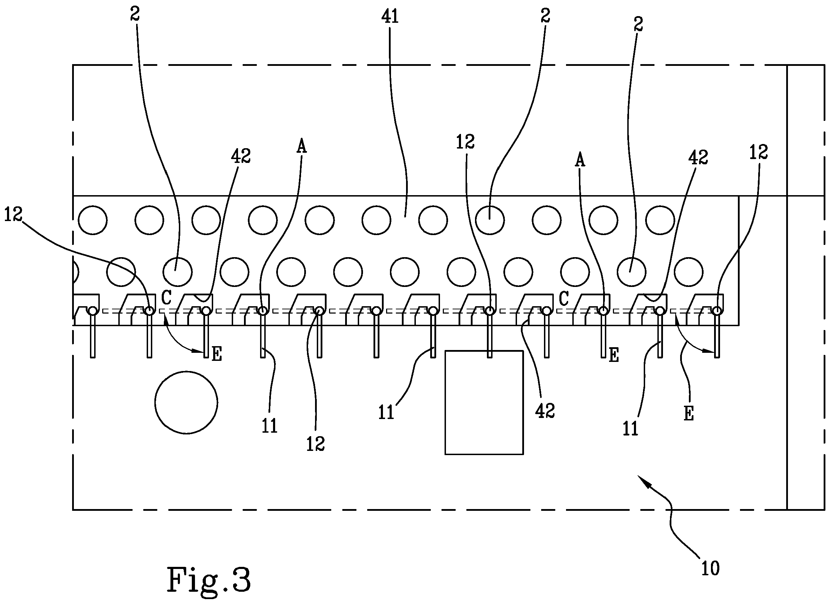

The shielding means 10 of the invention are variable, in that they are provided with at least one screen 11 movable between a position of maximum covering C of the exchanger 2 and at least an exposure position, in which the heat exchanger 2 is left at least partially uncovered by the screen 11 (see figure 3).

The apparatus 1 comprises a plurality of movable screens 11 and, more preferably, a number of screens 11 for each exchanger 2.

More precisely, the screens 11 can be arranged in a plurality of exposure positions, including one of maximum exposure E, in which they do not cover the exchanger 2 completely or at all.

Hereinafter, for the sake of convenience, a generic position that may be taken on by the screens 11 will be called "operating position".

In different operating positions, each screen 11 covers the exchanger 2 by a predetermined extent, i.e. over a given surface.

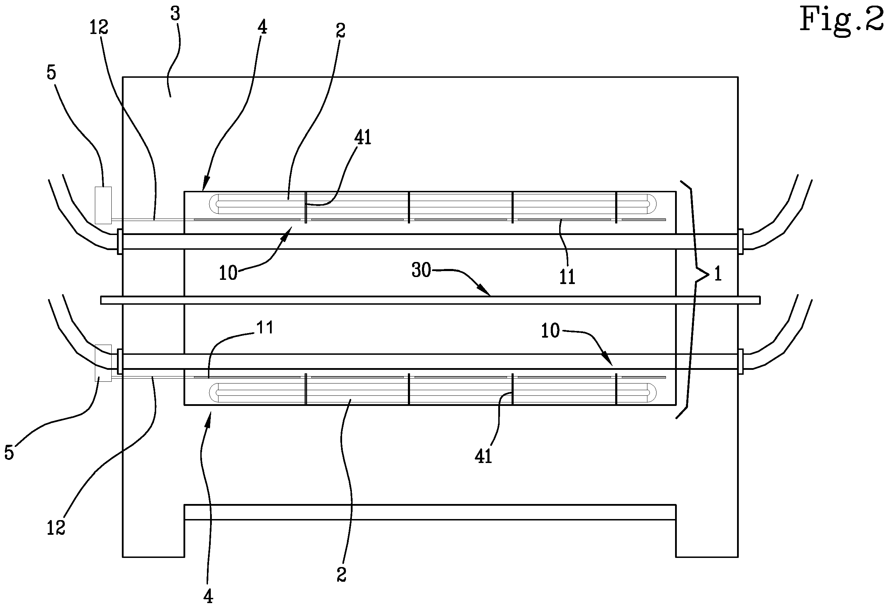

In fact, given that, as shown in figures 1 and 2, the shielding means 10 are arranged between the plane of the conveyor 30 and the exchangers 2, they are able to completely or partly "block off" the heat irradiated by the ceramic products toward the exchangers 2.

Therefore, each operating position of the screens 11 can be characterized by the extent of the area of the exchanger 2 covered by it, taking the plane of the conveyor 30 as a reference or "point of view".

Each screen is preferably planar in shape and can comprise or consist of a rigid plate-like flap 11, for example made of insulating material.

Such flap 11 can have a quadrangular perimeter, preferably rectangular.

In particular, each flap 11 can be arranged with its length transversal to the longitudinal direction of extension of the kiln 3 and, as a consequence, of the conveyor 30.

Each screen 11 is rotatable about a respective axis of rotation A, so as to be able to be arranged in its various operating positions.

Therefore, each operating position is an angular position of the screen 11, which corresponds to a degree of coverage of the exchanger 2 and, therefore, the extent of the covered area.

In this case, based on the inclination of a given screen 11, and thus based on the specific operating position, one obtains a different absorption of heat by the portion of the exchanger 2 associated with that screen 11. This aspect will be discussed further in the explanation of the operation of the invention.

Every screen 11 can have a rotatably constrained edge, through which the axis of rotation A passes, and an opposite free edge; in addition it can have a longitudinal extent parallel to the axis of rotation A and perpendicular, therefore, to the direction of conveyance of the ceramic articles along the conveyor 30.

Preferably, when the screens 11 move from the position of maximum covering C towards an exposure position, they are moved in an opposite direction relative to the exchanger 2, i.e. toward the plane of the conveyor 30.

In even more detail, according to a preferential aspect, each screen 11 has an extent that is equal to or greater than the width of the associated exchanger 2.

In fact, if the exchangers 2 are arranged with their length in the direction of longitudinal extension of the conveyor 30, they will have a width that is transverse to that direction; therefore, if the screens 11 are hinged on axes transverse to the longitudinal direction of the conveyor 30 (and of the kiln 3), to ensure the effective and complete lateral covering of the exchangers 2, the screens 11 will usefully be fairly long (or wide, based on the orientation) so as to cover the cross section of the associated exchanger 2.

The coverage (and exposure) of the exchangers 2 in the direction of their length effected, and above all adjusted, by setting the screens 11 into rotation, something that will be returned to during the explanation of the operation of the invention.

If the exchangers 2 and the plane of the conveyor 30 are parallel, in its position of maximum exposure E, every screen 11 can be arranged perpendicular to that plane and, in the position of maximum covering C (or minimum exposure), it can be parallel to the same plane.

The screens 11 intended to adjust the coverage of a same exchanger 2 (or at least a portion thereof) are mutually arranged in such a way that, in the respective positions of maximum covering C, they will completely cover the aforesaid portion of the exchanger 2.

In particular, in their position of maximum covering C, the screens 11 associated with a same exchanger 2 can be parallel to one another and, preferably, substantially coplanar, so as to define a substantially continuous covering wall, except for possible small slits between one screen 11 and another which do not appreciably impact the functionality of the apparatus 1 of the invention.

In this case, the covering wall is parallel to the plane of the conveyor 30.

In the preferred embodiment, in which the screens 11 are rotatable, those associated with a same conveyor 30 preferably have coplanar axes and are arranged at a mutual distance substantially equal to the distance between the aforesaid constrained edge and the opposite free edge.

If the screens 11 extend with their length in the direction of the axis of rotation A, the distance identified in the preceding paragraph is the width of the screen 11 itself.

Optional and non-mandatory constructive aspects of the shielding means 10 are described below.

The shielding means 10 can comprise, at least for each exchanger 2, a support structure 4 provided for attaching the screens 11, and which can be passed through by the tubes of the exchanger 2.

In detail, this structure 4 can comprise one or more support elements 41, for example plate-like elements preferably set vertically, provided with through holes for the passage of one or more rows of tubes 2 of the exchanger (see figure 3).

In practical terms, the support elements 41, besides supporting the screens 11 (and optionally further components described below) can also act like templates 11 for positioning the tube bundles of the exchanger 2.

In the case represented in the figures, the tubes 2 are set in two horizontal rows at a predetermined mutual distance, the tubes of one row being staggered relative to those of the other row for reasons of efficiency of absorption that are not pertinent to the present description.

As partly alluded to above, the flaps 11 of the screens are revolutely coupled to the support structure 4, for example by hinge pins 12 fixed at one of the sides of the individual flap 11, for example one of the larger sides, in the case of a parallelepiped shape.

Even more in detail, in each of the aforementioned support elements 41 there can be fashioned a guide and coupling aperture 42, which originates from a lower edge of the element itself and defines an indentation of an arched shape, which in turn defines the guide for inserting the pin 12.

The aperture 42 ends in a seat for the pin 12 to rest in, for example U shaped.

The pins 11 and the aforesaid templates 11 can be made of 253 MA, stainless steel, or so-called "black steel" or another material with high heat resistance.

The proposed apparatus 1 can comprise activating means 5, for example of a motorized type, able to automatically move the screens 11.

In detail, the activating means 5 can be capable of individually activating the screens 11 or else can activate a plurality thereof simultaneously.

In both cases, the activating means 5 are intended to perform an adjustment in moving of the screens 11 in multiple operating positions. The activating means 5 can comprise servo-controls, for example mounted at the templates 11, or more complex kinematic systems.

For example, the aforementioned pins 12 can protrude externally of the templates 11 with a prismatic section suitable for mechanical coupling with the servo-controls 5.

If use is made of kinematic systems based on levers or chains, a number of pins 12 can be constrained to the same transmission gears, so that the associated flaps 11 can be activated together.

Furthermore, the apparatus 1 of the invention can include a processing unit, such as a computer or a PLC or the like, configured to control the activating means 5 so as to adjust the exposure of the heat exchanger 2, according to a predefined program, which is comprised and runs in the unit itself.

The operation of the invention is described below.

Based on the type of ceramic article produced in the kiln 3 and based on the specific cooling section in which the invention is implemented, and also based on further parameters tied to technological processes in the industry, the desired degree of heat absorption must be provided within a given section of the kiln 3.

Given that, as explained above, the irradiation of heat from the tiles toward the exchangers 2 is reduced by the position of the screens 11, the apparatus 1 of the invention enables the different screens 11 to be arranged in such a way as to obtain the desired level of heat absorption.

In order to obtain this, the screens 11 of a given exchanger 2, or a part of these screens 11 placed opposite a certain portion of the exchanger 2, are activated in rotation by the servo-controls, or other activating means 5, so as to place them in the angular position corresponding to the desired absorption.

In this manner, therefore, one avoids both an over-absorption which could create morphological defects in the ceramic article, particularly in the planarity of tiles, and an under-absorption, which would decrease the effectiveness in the use of the exchangers 2 and would make the cooling process longer.

In summary, based on the aforesaid technological production requirements, the flaps 11 are arranged in a respective operating position which is comprised between the maximum covering one C, in which there is minimal heat absorption, ideally none, and the one of maximum absorption, in which the efficiency of the exchanger 2 is exploited 100%. Various flaps 11 of the same apparatus 1, which may even be associated with the same exchanger 2, will thus be located in different angular positions, positions that can be changed over time as desired based on the changed technological and production requirements, with an extreme level of versatility and adaptability of the invention.

One example of application is that of exploiting the aforesaid processing unit not only to control and adjust the positions of the screens 11, but also for an initial learning phase, in which the program for adjusting the screens 11 is obtained through a series of experiments serving to identify the characteristic parameters of the specific kiln 3 and the specific exchangers 2 with which the invention functionally cooperates.

## Claims

1. An adjustable heat exchange system, comprising at least one heat exchanger (2) and an apparatus (1) for adjusting the heat exchange, comprising shielding means (10) arranged facing at least one portion of said heat exchanger (2), said system being **characterized in that** said shielding means (10) are provided with a plurality of screens (11) each movable between a position of maximum covering (C) of the heat exchanger (2) and at least an exposure position, in which the heat exchanger (2) is left at least partially uncovered by the screen (11); wherein the plurality of screens (11) are mutually arranged in such a way that, in the position of maximum covering (C) thereof, they completely cover the above mentioned portion of the heat exchanger (2); and wherein each screen (11) is rotatable about an axis of rotation (A).

2. A system according to the preceding claim, wherein each screen (11) is movable in a plurality of exposure positions, in each of which it covers the heat exchanger (2) for a predetermined extension.

3. A system (1) according to at least any preceding claim, comprising activating means (5) able to automatically move said screen (11).

4. A system (1) according to the claim 1, wherein, in their position of maximum covering (C), the screens (11) are coplanar.

5. A system (1) according to the preceding claim, in which the axes of rotation of several screens (11) are coplanar and arranged at a mutual distance equal to the distance between a first edge of the screen (11) where the respective axis of rotation (a) lies and an opposite free edge.

6. A system (1) according to at least one of claims 3 to 5, comprising a processing unit configured for controlling said activating means (5) so as to adjust the exposure of the heat exchanger (2) according to a predefined program.

7. A system according to at least one of the preceding claims, wherein said heat exchanger (2) has a planar development, said screens (11), in the position of complete covering thereof, being arranged parallel to the heat exchanger (2).

## Patentansprüche

1. Einstellbares Wärmetauschsystem, umfassend zumindest einen Wärmetauscher (2) und eine Vorrichtung (1) zur Einstellung des Wärmeaustauschs, umfassend Abschirmmittel (10), die so angeordnet sind, dass sie zumindest einem Abschnitt des Wärmetauschers (2) zugewandt sind, wobei das System **dadurch gekennzeichnet ist, dass** die Abschirmmittel (10) eine Vielzahl von Schirmen (11) aufweisen, die jeweils beweglich sind zwischen einer Stellung der maximalen Abdeckung (C) des Wärmetauschers (2) und zumindest einer Expositionsstellung, in welcher der Wärmetauscher (2) zumindest teilweise nicht von dem Schirm (11) verdeckt wird;
wobei die Vielzahl von Schirmen (11) derart relativ zueinander angeordnet sind, dass sie in ihrer Stellung der maximalen Abdeckung (C) den oben genannten Abschnitt des Wärmetauschers (2) vollständig verdecken; und
wobei jeder Schirm (11) um eine Drehachse (A) drehbar ist.

2. System nach dem vorhergehenden Anspruch, wobei jeder Schirm (11) in eine Vielzahl von Expositionsstellungen bewegt werden kann, in denen er jeweils den Wärmetauscher (2) in einem vorbestimmten Ausmaß verdeckt.

3. System nach zumindest einem der vorhergehenden Ansprüche, umfassend Betätigungsmittel (5) zum automatischen Bewegen des Schirms (11).

4. System nach Anspruch 1, wobei die Schirme (11), in ihrer Stellung der maximalen Abdeckung (C), koplanar zueinander sind.

5. System nach dem vorhergehenden Anspruch, wobei die Drehachsen der mehreren Schirme (11) koplanar zueinander und in einem Abstand voneinander angeordnet sind, der gleich dem Abstand zwischen einem ersten Rand des Schirms (11), auf dem die jeweilige Drehachse (A) liegt, und einem diesen gegenüberliegenden freien Rand ist.

6. System nach zumindest einem der Ansprüche von 3 bis 5, umfassend eine Verarbeitungseinheit, die dafür konfiguriert ist, die Betätigungsmittel (5) zu steuern, um die Exposition des Wärmetauschers (2) nach einem vordefinierten Programm einzustellen.

7. System nach zumindest einem der vorhergehenden Ansprüche, wobei der Wärmetauscher (2) einen ebenen Verlauf aufweist, wobei die Schirme (11), in ihrer Stellung der vollständigen Abdeckung, parallel zu dem Wärmetauscher (2) angeordnet sind.

## Revendications

1. Un système d'échange de chaleur réglable, comprenant au moins un échangeur de chaleur (2) et un appareil (1) pour le réglage de l'échange de chaleur, comprenant des moyens de blindage (10) disposés en face d'au moins une portion dudit échangeur de chaleur (2), ledit système étant **caractérisé en ce que** lesdits moyens de blindage (10) sont dotés d'une pluralité d'écrans (11) mobiles, chacun, entre une position de couverture maximale (C) de l'échangeur de chaleur (2) et au moins une position d'exposition, dans laquelle l'échangeur de chaleur (2) est laissé au moins partiellement découvert par l'écran (11) ;
où la pluralité des écrans (11) sont réciproquement disposés de manière à ce que, dans leur position de couverture maximale (C), ils couvrent complètement la portion susmentionnée de l'échangeur de chaleur (2) ; et
où chaque écran (11) peut tourner autour d'un axe de rotation (A).

2. Le système selon la revendication précédente, dans lequel chaque écran (11) est mobile dans une pluralité de positions d'exposition, dans chacune desquelles il couvre l'échangeur de chaleur (2) sur une extension prédéfinie.

3. Le système selon au moins l'une quelconque des revendications précédentes, comprenant des moyens d'actionnement (5) destinés à déplacer automatiquement ledit écran (11).

4. Le système selon la revendication 1, dans lequel, dans leur position de couverture maximale (C), les écrans (11) sont coplanaires.

5. Le système selon la revendication précédente, dans lequel les axes de rotation de plusieurs écrans (11) sont coplanaires et disposés à une distance réciproque égale à la distance entre un premier bord de l'écran (11) où se situe l'axe de rotation (A) respectif et un bord libre opposé.

6. Le système selon au moins l'une des revendications de 3 à 5, comprenant une unité de traitement configurée pour commander lesdits moyens d'actionnement (5) de manière à régler l'exposition de l'échangeur de chaleur (2) selon un programme prédéfini.

7. Le système selon au moins l'une des revendications précédentes, dans lequel ledit échangeur de chaleur (2) a un développement plane, lesdits écrans (11), dans leur position de couverture maximale, étant disposés parallèlement à l'échangeur de chaleur (2).
